## Europäisches Patentamt
## European Patent Office
## Office européen des brevets

(19)

(11) Veröffentlichungsnummer: **0 003 617**
**B1**

(12)

# EUROPÄISCHE PATENTSCHRIFT

(45) Veröffentlichungstag der Patentschrift:
07.10.81

(51) Int. Cl.³: **G 01 N 31/08, F 16 K 11/00**

(21) Anmeldenummer: **79100442.7**

(22) Anmeldetag: **14.02.79**

(54) Umschalteinrichtung mit einem Verzweigungsstück zwischen zwei gaschromatographischen Trennsäulen.

(30) Priorität: **14.02.78 DE 2806123**

(43) Veröffentlichungstag der Anmeldung:
**22.08.79 Patentblatt 79/17**

(45) Bekanntmachung des Hinweises auf die Patenterteilung:
**07.10.81 Patentblatt 81/40**

(84) Benannte Vertragsstaaten:
**CH FR GB IT**

(56) Entgegenhaltungen:
DE-A-2 520 075
DE-B-1 183 717
DE-B-2 655 387
FR-A-1 363 871
GB-A-949 067
US-A-3 385 101

INSTRUMENT NEWS, Vol. 19, Nr. 4,
The Perkin-Elmer Corp. Norwalk,
"A new accessory permits back flushing
and peak cutting on the
model F 11 gas chromatograph",
Seite 16

(73) Patentinhaber: **SIEMENS AKTIENGESELLSCHAFT Berlin
und München, Postfach 22 02 61, D-8000 München 22 (DE)**

(72) Erfinder: **Müller, Friedhelm, Ing. grad.,
Rudolf-Diesel-Strasse 31,
D-7515 Linkenheim-Hochstetten 1 (DE)**

(56) Entgegenhaltungen:
JOURNAL OF CHROMATOGRAPHY, Vol. 18,
1965
Amsterdam, NL,
D. R. DEANS: "An improved technique
for back-flushing gas chromatographic
columns", Seiten 477–481

CHROMATOGRAPHIA, Vol. 1, 1968,
D. R. DEANS: "A new technique for
heart cutting in gas chromatography",
Seiten 18–22

GASCHROMATOGRAPHY, 1972,
G. SCHOMBURG et al.:
"Automation in gas chromatography",
Seiten 285–294

## Umschalteinrichtung mit einem Verzweigungsstück zwischen zwei gaschromatographischen Trennsäulen

Die Erfindung bezieht sich auf eine Einrichtung zur Umschaltung der Strömungsrichtung in einem, im Hauptströmungsweg zwischen zwei gaschromatographischen Trennsäulen angeordneten Verzweigungsstück, mit einer der ersten Trennsäule benachbarten ersten Anschlusstelle zum Anschluss eines ersten Hilfsströmungswegs und mit einer der zweiten Trennsäule benachbarten zweiten Anschlusstelle für einen ständig von Trägergas aus der Trägergasquelle durchströmten zweiten Hilfsströmungsweg sowie mit in den Hilfsströmungswegen angeordneten Mitteln zur Einstellung der in den Hilfsströmungswegen herrschenden Drücke zur Erzeugung von Druckgefällen wechselnder Richtung im Verzweigungsstück.

Derartige Einrichtungen werden zwischen gaschromatographischen Trennsäulen mit verschiedenen Eigenschaften eingesetzt, um nach der mit «Cutting» bezeichneten Methode Probenkomponenten, die aus der ersten Trennsäule austreten, den Eintritt in die zweite Trennsäule zu versperren oder freizugeben. Die dazu notwendige Umschaltung der Strömungsrichtung wird ventillos durch Erzeugung von Druckgefällen wechselnder Richtung mit Hilfe von Druckänderungen in den Hilfsströmungswegen bewirkt (INSTRUMENT NEWS, Vol. 19, 1969, Nr. 4, Seite 16).

Bei dieser bekannten Einrichtung führt der erste Hilfsströmungsweg von der der ersten Trennsäule benachbarten ersten Anschlusstelle weg über ein Absperrventil in einen druckfreien Raum (Atmosphäre).

Der ein Absperrventil und einen Druckregler enthaltende zweite Hilfsströmungsweg führt der zweiten Anschlusstelle im Verzweigungsstück ständig Trägergas zu. Bei geschlossenem Absperrventil im ersten Hilfsströmungsweg bleibt die Hauptströmung zwischen den beiden Trennsäulen unbeeinflusst. Wird das Absperrventil geöffnet, so geht der Druck an der ersten Anschlussstelle zurück, und durch den vom Druckregler im zweiten Hilfsströmungsweg aufrechterhaltenen Druck an der zweiten Anschlusstelle ergibt sich eine Rückströmung, so dass die Verbindung zur zweiten Trennsäule unterbrochen wird und keine weiteren Probenkomponenten in diese gelangen.

Schwierigkeiten ergeben sich bei den bekannten Einrichtungen dadurch, dass die Ventile in mindestens einem der Hilfsströmungswege auch mit dem Probenstrom in Berührung kommen, so dass sich hier hochsiedende Probenkomponenten ansetzen und die Ventile unbrauchbar machen können. Das Eindringen von Probenkomponenten in den zweiten Hilfsströmungsweg wird bei der aus der obengenannten Literaturstelle bekannten Einrichtung dadurch verhindert, dass mit Hilfe des Druckreglers der Druck so eingestellt wird, dass er geringfügig über dem Druck im Hauptströmungsweg liegt und so eine ständige schwache Trägergasströmung durch die zweite Anschlusstelle in den Hauptströmungsweg aufrechterhalten wird.

Die Einstellung dieses nur geringfügigen Überdrucks hat sich in der Praxis als recht schwierig erwiesen, da die Druckverhältnisse und damit die Strömung im Hauptströmungsweg nicht merkbar beeinflusst werden dürfen. Um Probenkomponenten von den Ventilen im ersten Hilfsströmungsweg fernzuhalten, müssen Abscheidefilter vorgesehen werden, was den Nachteil hat, dass infolge ihres relativ grossen Volumens bei der Umschaltung Auffüllvorgänge stattfinden, die zur Verzögerung der Schaltwirkung führen. Die beim Schliessen des Absperrventils in dem vom Hauptströmungsweg wegführenden ersten Hilfsströmungsweg auftretenden Druckstösse können ebenfalls zu Störungen führen. Die bekannte Einrichtung soll deshalb so verbessert werden, dass Ventile in den Hilfsströmungswegen nicht mit dem Probenstrom in Berührung kommen und bei welcher Auffüllvorgänge und Druckstösse während des Umschaltvorganges vermieden werden, so dass die Wirkung der Umschaltung sofort einsetzt. Ferner wird angestrebt, die Einstellung des Trägergasdrucks in dem zweiten Hilfsströmungsweg weniger kritisch zu machen.

Es besteht ausserdem der Wunsch, den Zeitpunkt der Umschaltung möglichst genau zu bestimmen, um eine interessierende Peak-Gruppe in der zweiten Trennsäule aufzutrennen. Bisher war es hierzu erforderlich, die Umschaltzeitpunkte nach der Auswertung der am Ausgang der zweiten Trennsäule erscheinenden Chromatogramme nach mehrfachen Dosierungen durch Probieren zu ermitteln. Da die Laufzeiten der Komponenten auf den beiden in Reihe geschalteten Säulen im allgemeinen verschieden sind, ist die Abschätzung der Zeitpunkte für die Umschaltung sehr erschwert.

Die Erfindung, wie sie in den Ansprüchen gekennzeichnet ist, löst diese Aufgaben.

Alle Mittel zur wechselnden Einstellung des Drucks in den Hilfsströmungswegen sind ausschliesslich in den zu den Anschlusstellen im Verzweigungsstück hinführenden Zweigen angeordnet. Jeder Hilfsströmungsweg weist einen eigenen Ausgang auf, ist also für sich selbständig, und wird ständig von Trägergas durchströmt, wobei die Hilfsströmung jeweils grösser ist als die aus der ersten Trennsäule austretende Hauptströmung mit den Probensubstanzen, mit denen die Ventile auf diese Weise nicht in Berührung kommen. Infolge des Druckteiler-Effekts ist die Einstellung des Drucks zur Erzeugung einer ständigen Strömung in den Hilfsströmungswegen weniger kritisch. Beim Umschalten finden auch keine Auffüllvorgänge statt, Druckstösse treten nicht auf.

Ist durch entsprechende Einstellung der Druckverhältnisse in den Hilfsströmungswegen im Verzweigungsstück des Hauptströmungswegs ein Druckgefälle in Richtung auf die zweite Trennsäule vorhanden, so fliesst die Hauptströmung unbeeinflusst von der ersten zur zweiten Trennsäule. Nach Umschaltung des Druckgefälles in Gegenrichtung wird der aus der ersten Trennsäule austretende Teil der Hauptströmung zusammen mit der von der zweiten Anschlusstelle her zurückströmenden Gasmenge über die erste Anschlusstelle in den zweiten Zweig des ersten Hilfsströmungsweges und zu dem gaschromatographischen Detektor geführt, während die zweite Trennsäule über den zweiten Hilfsströmungsweg mit Trägergas beströmt wird.

Da der gesamte Probenstrom in dieser Schaltstellung vollständig über den am Ausgang des ersten Hilfsströmungsweges liegenden Detektor geführt wird, können die aus der ersten Trennsäule austretenden Komponenten bis zur Umschaltung auf beide Trennsäulen verzögerungsfrei beobachtet werden. Für die Festlegung der Umschaltzeitpunkte (Schnittstellen) sind daher maximal zwei Probendosierungen erforderlich: nach der ersten Dosierung werden die Umschaltzeitpunkte anhand des an dem Detektor beobachteten Peak-Diagramms festgelegt, bei der zweiten Dosierung wird nach dieser Festlegung umgeschaltet und neben dem Chromatogramm aus einem der zweiten Trennsäule nachgeschalteten Detektor nochmals das Chromatogramm des Detektors im ersten Hilfsströmungsweg aufgenommen. Beim Vergleich der beiden Chromatogramme kann dann unmittelbar kontrolliert werden, ob die Komponenten, die vom zweiten Detektor registriert wurden, im Diagramm des ersten Detektors fehlen.

Es ist natürlich auch möglich, hinter der Umschalteinrichtung anstelle einer zweiten Trennsäule mehrere Säulen über eine ventillos steuerbare Verzweigung parallel zu schalten. Bei der zweiten Dosierung können dann entsprechend der zu lösenden Trennaufgaben bestimmte Stoffgruppen zur weiteren Auftrennung in die eine oder die andere Säule überführt werden.

Die Umschalteinrichtung lässt sich sowohl bei gepackten Trennsäulen wie auch bei Kapillarsäulen anwenden. Besondere Vorteile ergeben sich bei Kapillarsäulen, da hier infolge des geringen Säulenvolumens keine verzögernd wirkenden Auffüllvorgänge auftreten. Daher können Umschaltzeiten von 0,1 sec und weniger erreicht werden.

Im folgenden wird die Erfindung anhand von Ausführungsbeispielen näher erläutert.

Es zeigen
Figur 1 die prinzipielle Anordnung der verschiedenen Teile der Umschalteinrichtung,
Figur 2 eine andere, insbesondere für die Verwendung mit Kapillarsäulen geeignete Ausführungsform,
Figur 3A bis 3D mit Hilfe der Umschalteinrichtung erzielte Chromatogramme.

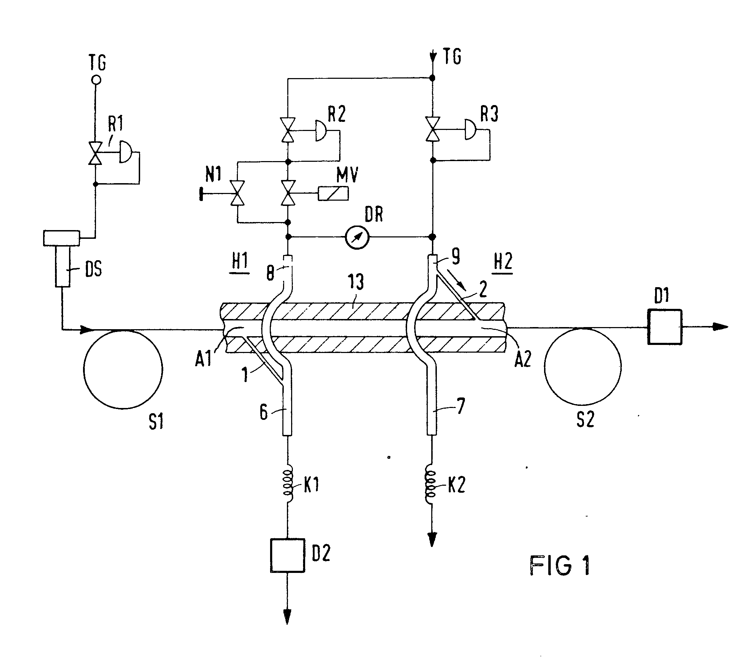

Nach Figur 1 sind zwei gaschromatographische Trennsäulen S1 und S2 über das im Hauptströmungsweg angeordnete Verzweigungsstück 13 hintereinandergeschaltet. Über einen Vordruckregler R1 und eine Dosierstelle DS wird aus einer Trägergasquelle TG Trägergas in die erste Trennsäule S1 eingespeist. Zwei für sich selbständige Hilfsströmungswege H1 und H2 mit den Zweigstücken 8, 6 und 9, 7 werden über die Druckregler R2 und R3 ebenfalls aus der Trägergasquelle TG gespeist und sind über Kapillaren 1 und 2 mit dem Hauptströmungsweg in den Anschlusstellen A1 und A2 des Verzweigungsstücks 13 verbunden. Zwischen dem Ausgang des Druckreglers R2 und dem Kapillaranschluss an die Anschlusstelle A1 sind im ersten Hilfsströmungsweg H1 ein Absperrventil MV und ein diesem parallelgeschaltetes Nadelventil N1 angeordnet. In dem von der ersten Anschlusstelle A1 abgehenden Zweigstück 6 des Hilfsströmungswegs H1 folgt auf eine feste Strömungsdrossel K1 ein gaschromatographischer Detektor D2. Die Strömungsdrossel K1 ist so bemessen, dass der Durchfluss der hier fliessenden Hilfsströmung grösser ist als der Durchfluss der aus der ersten Trennsäule austretenden Hauptströmung.

Der zweite Hilfsströmungsweg H2 mündet über eine, in seinem von der Anschlusstelle A2 abgehenden Zweigstück 7 angeordneten festen Strömungsdrossel K2 in einen druckfreien Raum (Atmosphäre). Die Einstellung der Drücke in den Zweigstücken 8 und 9 der Hilfsströmungswege H1 und H2 erfolgt über die Sollwert-Einstellung der Druckregler R2 und R3 bzw. über das Nadelventil N1. Zweckmässig wird hierzu ein Differenzdruckmesser DR zwischen die Zweigstücke 8 und 9 geschaltet. Der Druckregler R3 wird so eingestellt, dass sein Ausgangsdruck grösser ist als der Druck, der sich bei direkter Reihenschaltung der Trennsäulen S1 und S2 und bei Versorgung beider Säulen ausschliesslich über den der Säule 1 vorgeschalteten Druckregler R1 im Hauptströmungsweg einstellen würde. Der Ausgangsdruck des Druckreglers R2 wird etwas höher eingestellt und das Nadelventil N1 so abgeglichen, dass bei geöffnetem Absperrventil MV das Druckgefälle im Verzweigungsstück 13 zwischen den Anschlussstellen A1 und A2 in Richtung von Trennsäule 1 nach Trennsäule 2 wirkt. In dieser Schaltstellung wird der Detektor D2 im ersten Hilfsströmungsweg H1 ausschliesslich von Trägergas beströmt, d.h., es treten keine Probenkomponenten über die Kapillare 1 in den Hilfsströmungsweg H1 ein, da infolge der angegebenen Druckeinstellung eine kleine Menge Trägergas aus dem ersten Hilfsströmungsweg H1 über die Kapillare 1 in den Hauptströmungsweg eingespeist wird. Zur Umkehrung des Druckgefälles wird lediglich das Absperrventil MV geschlossen. Das Druckgefälle verläuft nunmehr in Richtung von Anschlusstelle A2 nach Anschlusstelle A1. Die Trennsäule S2 wird über die Kapillare 2 und den Anschluss A2 aus dem zweiten Hilfsströmungsweg H2 mit Trägergas versorgt. Es bildet sich im Hauptströmungsweg eine geringe Trägergasdrückströmung aus, die zusammen mit dem aus der Trennsäule S1 austretenden Gasstrom mit den aufgetrennten Probenkomponenten über die Kapillare 1 in das abgehende Zweigstück 6 des Hilfsströmungswegs H1 eintritt und über die Strömungsdrossel K1 in den Detektor D2 gelangt. Anhand des im Detektor D2 erstellten Chromatogramms kann bei Auftreten der gesuchten Komponenten die Umschaltung auf die zweite Trennsäule S2 unmittelbar durch Betätigen des Absperrventils MV vorgenommen werden. Der Probenstrom mit der besonders interessierenden Komponentengruppe tritt dann in die zweite Trennsäule S2 ein und wird danach mit dem chromatographischen Detektor D1 beobachtet, während der Detektor D2 im ersten Hilfsströmungsweg H1 weiter mit Trägergas versorgt wird, so dass er bei der nächsten Umschaltung sofort betriebsbereit ist.

Die Druckumschaltung in den Hilfsströmungswegen kann auch unter Verzicht auf die Ventile MV und N1 lediglich durch Verstellen des Sollwerts des Reglers R2 auf einen höheren bzw. niedrigeren Wert als den am Regler R3 eingestellten vorgenommen werden.

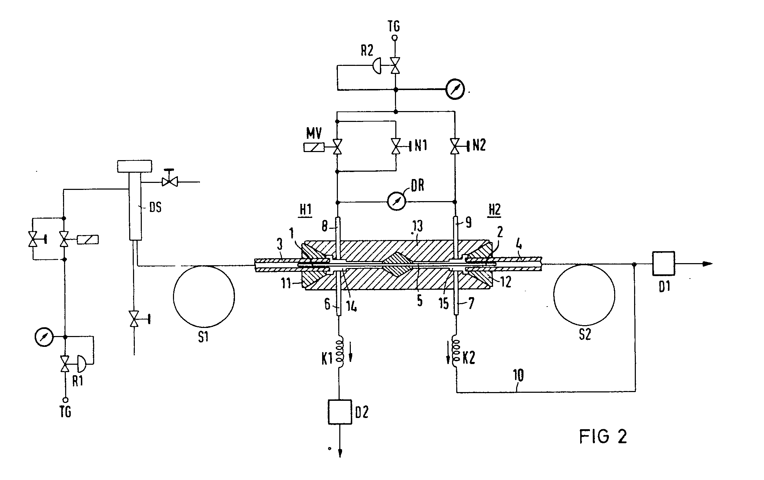

In Figur 2 ist eine Umschalteinrichtung mit einem Verzweigungsstück 13 angegeben, die besonders zur Verwendung mit Kapillarsäulen geeignet ist.

In die axiale Mittelbohrung des Verzweigungsstücks 13 ist von der einen Seite her das Endstück 3 der Trennsäule S1, von der anderen Seite her das Anfangsstück 4 der Trennsäule S2 eingeführt und mittels Dichtungen 11, 12 abgedichtet.

Der Hauptströmungsweg zwischen den Trennsäulen S1 und S2 verläuft durch eine abgedichtet im Verzweigungsstück 13 geführte Verbindungskapillare 5, die mit ihren Enden auf einer Strecke von etwa dem Zehn- bis Dreissigfachen des Kapillardurchmessers in das Endstück 3 der Trennsäule S1 bzw. in das Anfangsstück 4 der Trennsäule S2 hineinragt. Das Endstück 3 der Trennsäule S1 mündet in einen, die Verbindungskapillare 5 umfassenden Raum 14 im Verzweigungsstück 13, in welchen auch die Zweigstücke 8 und 6 des ersten Hilfsströmungswegs H1 münden und der die Anschlusstelle A1 bildet. Entsprechend ist der Raum 15 mit den Einmündungen von Anfangsstück 4 der Kapillarsäule 2 und den Zweigstücken 7 und 9 des zweiten Hilfsströmungswegs H2 als Anschlusstelle A2 anzusehen.

Die Kapillaren 1 und 2, mit denen die Anschlussstellen A1 und A2 mit den Hilfsströmungswegen H1 und H2 verbunden sind, werden hier durch die Ringspalte gebildet, die zwischen den Innenwänden der End- bzw. Anfangsstücke 3, 4 und den eingeschobenen Teilen der Verbindungskapillare 5 entstanden sind.

Das von dem Raum 14 abgehende Zweigstück 6 des ersten Hilfsströmungswegs H1 führt, wie im vorhergehenden Ausführungsbeispiel, über die feste Strömungsdrossel K1 zu einem gaschromatographischen Detektor D2, das vom Raum 15 abgehende Zweigstück 7 des zweiten Hilfsströmungswegs H2 über die feste Drossel K2 entweder in einen druckfreien Raum oder, wie in der Figur gezeigt, über eine Leitung 10 zum Eingang des der Kapillarsäule S2 nachgeschalteten Detektors D1.

Die Speisung der Hilfsströmungswege H1 und H2 aus der Trägergasquelle TG erfolgt gemeinsam über den Druckregler R2, auf den im ersten Hilfsströmungsweg H1 das Abschaltventil MV und das diesem parallelgeschaltete Nadelventil N1, im zweiten Hilfsströmungsweg R2 das Nadelventil N2 folgen.

Das Nadelventil N1 wird so eingestellt, dass es einen grösseren Strömungswiderstand besitzt als das Nadelventil N2. Bei dieser Schaltung ist der Druck hinter dem Nadelventil N2 zwar vom Durchfluss in diesem Zweig des zweiten Hilfsströmungswegs H2 abhängig, die Schwankungen sind aber wegen der kleinen Strömungsmengen in den Kapillarsäulen so gering, dass sie praktisch vernachlässigbar sind.

Da die Gasdurchflüsse in beiden Hilfsströmungswegen gross sind im Verhältnis zum Durchfluss im Hauptströmungsweg, bleiben die Druckabfälle über die Nadelventile und damit die Strömungen in den Hilfsströmungswegen beim Umschalten praktisch konstant.

Die Einstellung der Druckverhältnisse in den Hilfsströmungswegen H1 und H2 wird bevorzugt mit Hilfe eines Differenzdruckmessers DR in der Weise vorgenommen, dass zunächst der Druck im Druckregler R2 auf einen Wert eingestellt wird, der über dem Druckwert liegt, der sich bei Reihenschaltung der Trennsäulen S1 und S2 unter der Wirkung des Druckreglers R1 einstellen würde. Dann wird das Absperrventil MV geöffnet und mit Hilfe des Nadelventils N2 der Differenzdruck am Differenzdruckmesser so eingestellt, dass der Druck im Zweigstück 8 des ersten Hilfsströmungswegs H1 höher liegt als im Zweigstück 9 des zweiten Hilfsströmungswegs. Das Absperrventil MV wird dann geschlossen und das Nadelventil N1 so abgeglichen, dass der Druck am Differenzdruckmesser in umgekehrter Richtung wirkt, d.h. im Zweigstück 8 herrscht ein niedrigerer Druck als im Zweigstück 9.

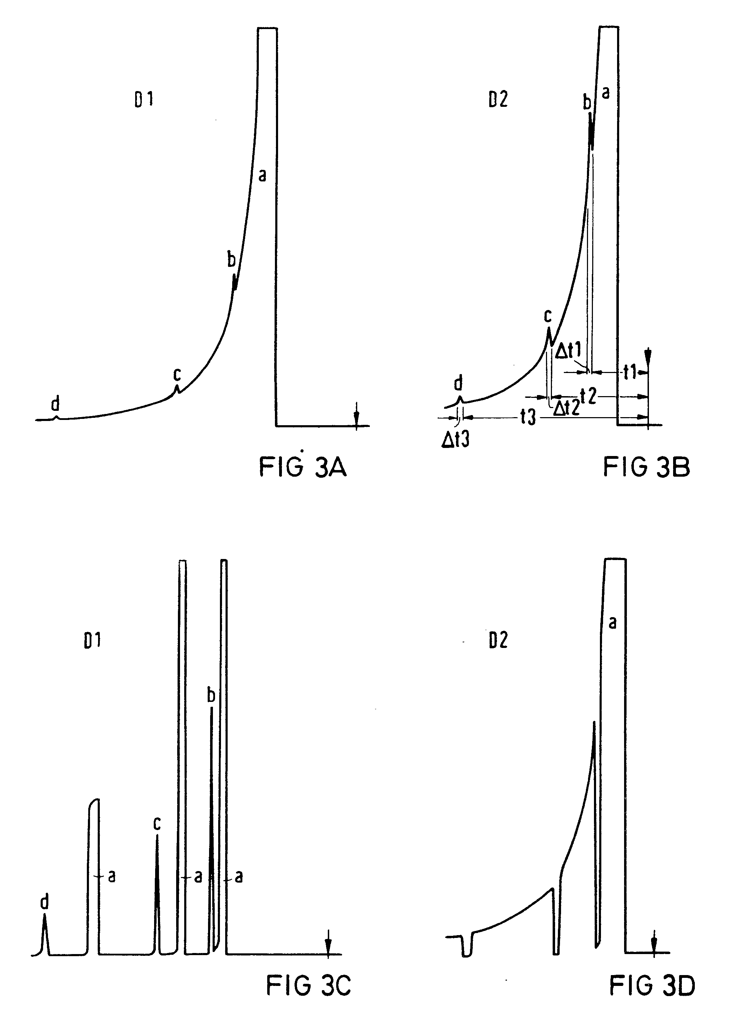

In den Figuren 3A bis 3D ist anhand eines Analysenbeispiels die Wirkungsweise der Umschalteinrichtung erläutert. Der Startzeitpunkt der Analyse ist jeweils am rechten Ende der Basislinie der Chromatogramme mit einem Pfeil markiert.

Figur 3A zeigt ein Chromatogramm, wie es von dem auf die zweite Trennsäule S2 folgenden Detektor D1 ohne Anwendung der Umschalteinrichtung aufgezeichnet wird. Es interessieren die den auf dem Tailing der Hauptkomponente a aufsitzenden Peaks b, c, d entsprechenden Komponenten, z.B. Verunreinigungen der Hauptkomponente. Figur 3B zeigt das Chromatogramm der gleichen Analyse, wie es bei Sperrung des Hauptströmungswegs zwischen der ersten und der zweiten Trennsäule von dem im Hilfsströmungsweg H1 liegenden Detektor D2 aufgezeichnet wird. Anhand dieses Chromatogramms können die beim nächsten Probendurchlauf anzuwendenden Schnittzeiten t1 + $\Delta$t1; t2 + $\Delta$t2; t3 + $\Delta$t3 unmittelbar bestimmt werden.

Das ermöglicht wiederum die zeitgenaue Betätigung der Umschalteinrichtung zu Beginn und Ende des jeweiligen Peaks b, c und d.

Figur 3C zeigt ein mit dem der zweiten Trennsäule S2 nachgeschalteten Detektor D1 aufgenommenes Chromatogramm mit den Peaks b, c und d, die jetzt höher verstärkt werden können, in diesem Beispiel achtfach, und den davon jeweils abgetrennten Teil der Hauptkomponente a.

Figur 3D zeigt ein gleichzeitig mit dem Detektor D2 im ersten Hilfsströmungsweg aufgenommenes Chromatogramm, in welchem die Peaks b, c und d einschliesslich des entsprechenden Anteils der Hauptkomponente a nicht mehr erscheinen.

## Patentansprüche

1. Einrichtung zur Umschaltung der Strömungsrichtung in einem im Hauptströmungsweg zwischen zwei gaschromatographischen Trennsäulen (S1, S2) angeordneten Verzweigungsstücks (13) mit einer der ersten Trennsäule (S1) benachbarten ersten Anschlusstelle (A1) zum Anschluss eines ersten Hilfsströmungswegs (H1) und mit einer der zweiten Trennsäule (S2) benachbarten zweiten Anschlusstelle (A2) für einen ständig von Trägergas aus der Trägergasquelle (TG) durchströmten zweiten Hilfsströmungsweg (H2) sowie mit in den Hilfsströmungswegen (H1, H2) angeordneten Mitteln zur Einstellung der in ihnen herrschenden Drücke zur Erzeugung von Druckgefällen wechselnder Richtung im Verzweigungsstück (13), dadurch gekennzeichnet, dass der erste Hilfsströmungsweg (H1) ständig von Trägergas durchflossen ist und aus einem, an die Trägergasquelle (TG) angeschlossenen, zu der ersten Anschlusstelle (A1) hinführenden Zweigstück (8) und einem von der ersten Anschlusstelle (A1) wegführenden Zweigstück (6) besteht, welches über eine feste Strömungsdrossel (K1) an einen gaschromatographischen Detektor (D2) angeschlossen ist, wobei die feste Strömungsdrossel (K1) so bemessen ist, dass der Durchfluss der hier fliessenden Hilfsströmung grösser ist als der Durchfluss der aus der ersten Trennsäule (S1) austretenden Hauptströmung und dass der zweite Hilfsströmungsweg (H2) aus einem zu der zweiten Anschlusstelle (A2) hinführenden Zweigstück (9) und einem von der zweiten Anschlusstelle (A2) wegführenden, eine feste Strömungsdrossel enthaltenden Zweigstück (7) besteht, wobei beide Zweige (9, 7) von Trägergas ständig durchströmt sind und dass Mittel zur wechselweisen Einstellung der Drücke ausschliesslich in den zu den Anschlusstellen (A1, A2) hinführenden Zweigstücken (8, 9) der Hilfsströmungswege (H1, H2) angeordnet sind und dass die Hilfsströmungswege (H1, H2) jeweils über eine Kapillare (1, 2) mit den Anschlusstellen (A1, A2) des im Hauptströmungsweg liegenden Verzweigungsstücks (13) verbunden sind.

2. Einrichtung nach Anspruch 1, dadurch gekennzeichnet, dass die Zuführung des Trägergases zu den Hilfsströmungswegen (H1, H2) über einen einzigen Druckregler (R2) geschieht, auf welchen im ersten Hilfsströmungsweg (H1) ein Absperrventil (MV) und ein diesem parallelgeschaltetes Nadelventil (N1) und im zweiten Hilfsströmungsweg (H2) ein Nadelventil (N2) folgen und dass die Nadelventile (N1, N2) so eingestellt sind, dass der Druckabfall über das Nadelventil (N2) im zweiten Hilfsströmungsweg (H2) geringer ist als der über das Nadelventil (N1) im ersten Hilfsströmungsweg (H1).

3. Einrichtung nach Anspruch 1, dadurch gekennzeichnet, dass jeder der beiden Hilfsströmungswege (H1, H2) über je einen Druckregler (R2, R3) mit Trägergas gespeist ist und dass die Erzeugung der wechselnden Druckgefälle im Hauptströmungsweg über die Sollwertverstellung der Druckregler (R2, R3) geschieht.

4. Einrichtung nach Anspruch 1, dadurch gekennzeichnet, dass jeder der Hilfsströmungswege (H1, H2) über je einen Druckregler (R2, R3) mit Trägergas gespeist ist und dass dem Druckregler (R2) im ersten Hilfsströmungsweg (H1) ein Absperrventil (MV) mit einstellbarem Nadelventil (N1) als Bypass nachgeschaltet ist, derart, dass die Umkehr des Druckgefälles im Hauptströmungsweg durch Öffnen oder Schliessen des Absperrventils (MV) geschieht.

5. Einrichtung nach Anspruch 1, dadurch gekennzeichnet, dass die Hilfsströmungswege (H1, H2) über im Hauptströmungsweg liegende Räume (14, 15) in dem Verzweigungsstück (13) als Anschlusstellen (A1, A2) ein- und austreten und dass die zu verbindenden Trennsäulen (S1, S2) mit ihren End- bzw. Anfangsstücken (3, 4) innerhalb des Verzweigungsstücks (13) jeweils bis zu dem Raum (14, 15) der betreffenden Anschlusstelle (A1, A2) führen und eine in der Mitte gegen das Verzweigungsstück (13) abgedichtete Verbindungskapillare (5) mit ihren beiden Enden auf einer Länge vom Zehn- bis Dreissigfachen des Kapillardurchmessers in das Endstück (3) bzw. das Anfangsstück (4), Ringspalte bildend, eingeführt ist und die Ringspalte als die Kapillaren (1, 2) zwischen den Anschlusstellen (A1, A2) und den Hilfsströmungswegen (H1, H2) wirken.

## Claims

1. Apparatus for switching-over the direction of flow in a branching member (13) which is arranged in the main flow path between two gaschromatographic separating columns (S1, S2), said member having a first connection point (A1) which is adjacent to the first separating column (S1) and which serves for the connection of a first auxiliary flow path (H1), and a second connecting point (A2) which is adjacent to the second separating column (S2) and which serves for the connection of a second auxiliary flow path (H2) which is continuously traversed by carrier gas from the carrier gas source (TG), and having means arranged in the auxiliary flow paths (H1, H2) for adjusting the pressures prevailing within the latter in order to produce pressure gradients of alternating direction in the branching member (13), characterised in that the first auxiliary flow path (H1) is continuously traversed by carrier gas and consists of a branch element (8) which is connected to the carrier gas source (TG) and leads to the first connecting point (A1), and of a branch element (6) which leads away from the first connecting point (A1) and is connected via a fixed flow constriction (K1) to a gas-chromatographic detector (D2), the fixed flow constriction (K1) being so designed that the flow of the auxiliary stream which flows at this point is greater than the flow of the main stream which emerges from the first separating column (S1); that the second auxiliary flow path (H2) consists of a branch element (9) which leads to the second connecting point (A2) and of a branch element (7) which leads away from the second connecting point (A2) and contains a fixed flow constriction, the two branches (9, 7) being continuously traversed by carrier gas; that means are provided for alternatively adjusting the pressures only in the branch elements (8, 9), which lead to the connecting points (A1, A2), of the auxiliary flow paths (H1, H2); and that the auxiliary flow paths (H1, H2) are each connected via a respective capillary (1, 2) to the connecting points (A1, A2) of the branching member (13) arranged in the main flow path.

2. Apparatus as claimed in Claim 1, characterised in that the carrier gas is supplied to the auxiliary flow paths (H1, H2) through a single pressure regulator (R2) which is followed in the first auxiliary flow path (H1), by a stop valve (MV) and a needle valve (N1) connected in parallel with the latter, and is followed in the second auxiliary flow path by a needle valve (N2); and that the needle valves (N1, N2) are set in such a way that the pressure drop through the needle valve (N2) in the second auxiliary flow path (H2) is less than the pressure drop through the neddle valve (N1) in the first auxiliary flow path (H1).

3. Apparatus as claimed in Claim 1, characterised in that each of the two auxiliary flow paths (H1, H2) is supplied with carrier gas via a respective pressure regulator (R2, R3), and that the production of the alternate pressure gradients in the main flow path is effected by adjustment of the set values of the pressure regulators (R2, R3).

4. Apparatus as claimed in Claim 1, characterised in that each of the auxiliary flow paths (H1, H2) is supplied with carrier gas via a respective pressure regulator (R2, R3), and that this pressure regulator (R2) in the first auxiliary flow path (H1) is succeeded by a stop valve (MV), with an adjustable needle valve (N1) provided as a by-pass in such a way that the pressure gradient in the main flow path is reversed by opening or closing the stop valve (MV).

5. Apparatus as claimed in Claim 1, characterised in that the auxiliary flow paths (H1, H2) enter and leave by way of chambers (14, 15) located in the main flow path in the branching member (13) and serving as the connecting points (A1, A2); and that final and initial elements (3, 4) of the separating columns (S1, S2) which are to be connected, each lead within the branching member (13) into the chamber (14, 15) of the respective connecting point (A1, A2), and a connecting capillary (5) which is sealed in the middle with respect to the branching member (13) is introduced at its ends for a length of ten to thirty times the capillary diameter into the final element (3) and the initial element (4), so as to form annular gaps, the annular gaps serving as the capillaries (1, 2) between the connecting points (A1, A2) and the auxiliary flow paths (H1, H2).

## Revendications

1. Dispositif d'inversion du sens du courant dans un raccord (13) de branchement, qui est interposé sur la voie pour le courant principal entre deux colonnes (S1, S2) de séparation par chromatographie en phase gazeuse et qui a un premier endroit (A1), voisin de la première colonne (S1), de raccordement d'une première voie (H1) pour le courant auxiliaire et un second endroit (A2), voisin de la seconde colonne (S2), de raccordement d'une seconde voie (H2) pour le courant auxiliaire parcourue constamment par du gaz porteur en provenance d'une source (TG), des moyens sur les voies (H1, H2) pour les courants auxiliaires réglant les pressions qui y règnent en vue d'alterner le sens des gradients de pression dans le raccord (13) de branchement, caractérisé en ce que la première voie (H1) pour le courant auxiliaire est parcourue constamment par du gaz porteur et se compose d'un raccord (8) de dérivation raccordé à la source (TG) de gaz porteur et menant au premier endroit (A1) de raccordement et, partant du premier endroit (A1) de raccordement, d'un raccord (6) de dérivation qui est raccordé à un détecteur (D2) de chromatographie en phase gazeuse par un étranglement (K1) fixe, dimensionné de manière à ce que le débit du courant auxiliaire qui y passe soit plus grand que celui du courant principal qui sort de la première colonne (S1) et la seconde voie (H2) pour le courant auxiliaire se compose d'un raccord (9) de dérivation menant au second endroit (A2) de raccordement et d'un raccord (7) de dérivation, qui a un étranglement (K2) fixe et qui part du second endroit (A2) de raccordement, les deux raccords (9, 7) étant parcourus constamment par du gaz porteur et il est prévu des moyens pour régler alternativement les pressions uniquement dans les raccords (8, 9) de dérivation destinés aux voies (H1, H2) pour les courants auxiliaires et menant aux endroits (A1, A2) de raccordement, les voies (H1, H2) pour les courants auxiliaires communiquant respectivement par un conduit (1, 2) capillaire avec les endroits (A1, A2) de raccordement du raccord (13) de branchement se trouvant sur la voie pour le courant principal.

2. Dispositif suivant la revendication 1, caractérisé en ce que l'amenée du gaz porteur aux voies (H1, H2) pour les courants auxiliaires s'effectue par l'intermédiaire d'un régulateur (R2) de pression unique auquel fait suite, dans la première voie (H1) pour le courant auxiliaire, une vanne (MV) d'arrêt et une vanne (N1) à pointeau montée en parallèle à la vanne d'arrêt, et dans la seconde voie (H2) pour le courant auxiliaire, une vanne (N2) à pointeau et les vannes (N1, N2) à pointeau sont réglées de manière à ce que la chute de pression par la vanne (N2) à pointeau dans la seconde voie (H2) pour le courant auxiliaire soit plus petite que celle par la vanne (N1) à pointeau dans la première voie (H1) pour le courant auxiliaire.

3. Dispositif suivant la revendication 1, caractérisé en ce que chacune des deux voies (H1, H2) pour les courants auxiliaires est alimentée en gaz porteur par respectivement un régulateur (R2, R3) de pression et l'obtention des gradients de pression alternatifs dans la voie pour le courant principal s'effectue par le réglage de la valeur de consigne du régulateur de pression (R2, R3).

4. Dispositif suivant la revendication 1, caractérisé en ce que chacune des voies (H1, H2) pour le courant auxiliaire est alimentée en gaz porteur par respectivement un régulateur (R2, R3) de pression et au régulateur (R2) de pression dans la première voie (H1) pour le courant auxiliaire fait suite une vanne (MV) d'arrêt à vanne (N1) à pointeau réglable servant de dérivation, de manière à ce que l'inversion du gradient de pression dans la voie pour le courant principal s'effectue par ouverture ou par fermeture de la vanne (MV) d'arrêt.

5. Dispositif suivant la revendication 1, caractérisé en ce que les voies (H1, H2) pour les courants auxiliaires entrent et sortent dans le raccord (13) de branchement par l'intermédiaire de chambres (14, 15) se trouvant dans la voie pour le courant principal et servant d'endroit (A1, A2) de raccordement, et les colonnes (S1, S2) de séparation à mettre en communication vont par leur embout (3, 4) d'extrémité et de départ à l'intérieur du raccord (13) de branchement respectivement jusqu'à la chambre (14, 15) de l'endroit (A1, A2) de raccordement concerné et un tube capillaire (5) de liaison rendu étanche est engagé au milieu du raccord (13) de branchement, alors que ses deux extrémités pénètrent dans l'embout (3) et l'embout (4) sur une longueur représentant de 10 fois à 30 fois le diamètre du tube capillaire en formant des intervalles annulaires qui servent de tubes capillaires (1, 2) entre les endroits (A1, A2) de raccordement et les voies (H1, H2) pour les courants auxiliaires.

FIG 1

FIG 2

0 003 617

D1

a

b

c

d

FIG 3A

D2

a
b

c

Δt1

t1

d

Δt2  t2

t3

Δt3

FIG 3B

D1

a

b

c

a

a

d

FIG 3C

D2

a

FIG 3D

13